# EUROPÄISCHE PATENTSCHRIFT

(11) **EP 0 704 671 B1**
(45) Veröffentlichungstag und Bekanntmachung des Hinweises auf die Patenterteilung: **05.12.2001**
(21) Anmeldenummer: 95114343.7
(22) Anmeldetag: 13.09.1995
(51) Int. Cl.: G01B 11/26, G01B 5/00, G01B 11/00

(54) **Vorrichtung und Verfahren zum Vermessen der Lage einer ersten Achse relativ zu einer zweiten Achse, insbesondere zum Vermessen einer Lenkachse**
Device and method for measuring the position of a first axis relative to a second axis, particularly for measuring a steering axle
Dispositif et procédé pour la mesure de la position d'un premier axe relative à un deuxième axe, particulièrement pour la mesure de l'essieu de direction

(30) Priorität: 15.09.1994 DE 4432828
(43) Veröffentlichungstag der Anmeldung: 03.04.1996
(73) Patentinhaber: Scheibner, Bernd, Dipl.-Ing., 38162 Cremlingen (DE)
(72) Erfinder: Wente, Holger, Dr.-Ing., D-38108 Braunschweig (DE); Scheibner, Bernd, Dipl.-Ing., D-38162 Cremlingen (DE); Thiedig, Ullrich, Dipl.-Ing., D-38118 Braunschweig (DE); Köster, Bernd, Dr. rer. nat., D-38106 Braunschweig (DE)
(74) Vertreter: Gramm, Werner, Prof. Dipl.-Ing.

(56) Entgegenhaltungen:
- EP-A- 0 491 369
- WO-A-87/06353
- WO-A-88/04404

## Beschreibung

Die Erfindung betrifft eine Vorrichtung und ein Verfahren zum Vermessen der Lage einer ersten Achse relativ zu einer zweiten Achse. Sowohl Vorrichtung wie auch Verfahren sind insbesondere zum Vermessen eines Zweiradrahmens geeignet, der eine im Sollzustand in einer Hauptsymmetrieebene liegende Lenkachse und in eine im Sollzustand senkrecht zur Hauptsymmetrieebene verlaufende Achse, beispielsweise eine Schwingenachse oder eine Tretkurbelachse, aufweist. Vorrichtung und Verfahren eignen sich dabei insbesondere zum Überprüfen der Maßhaltigkeit der Rahmen von Unfallmotorrädern. Die Anwendung des erfindungsgemäßen Verfahrens und der erfindungsgemäßen Vorrichtung ist jedoch auf diese Fälle nicht beschränkt, vielmehr sind Vorrichtung und Verfahren überall dort anzuwenden, wo zwei Achsen windschief zueinander verlaufen und die relative Lage beider Achsen zueinander für das Funktionieren der technischen Vorrichtung, Teil der sie sind, Voraussetzung ist. Beispiele hierfür sind Flugzeugfahrwerke, Produktionsanlagen mit schwenkbaren Teilen u.ä.

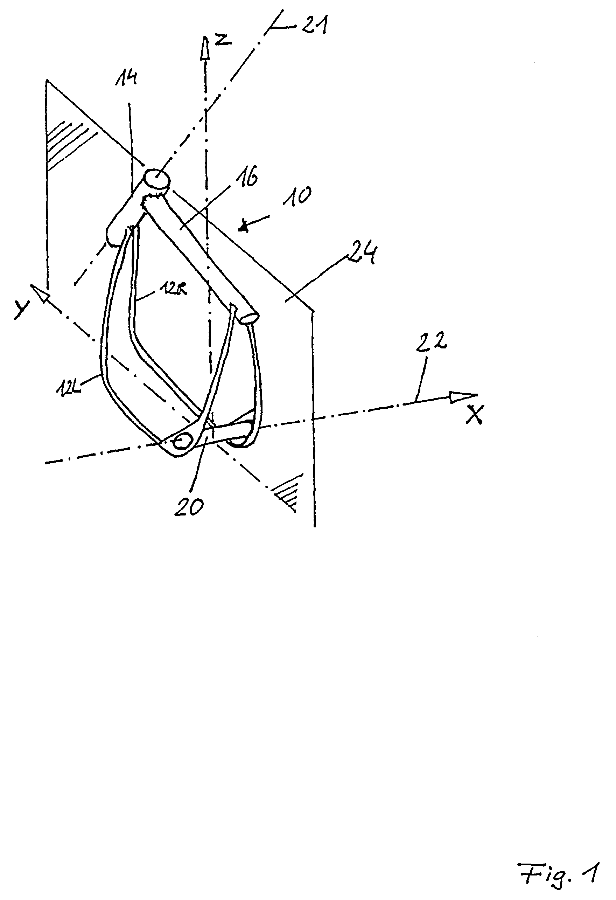

Ein typisches Vermessungsobjekt ist in Figur 1 dargestellt. Es handelt sich bei dem in Figur 1 dargestellten Objekt um einen Motorradrahmen 10, der in konventioneller Weise als Rohrschleifenrahmen mit zwei Unterzügen 12R und 12L aufgebaut ist. Die Unterzüge 12L und 12R bilden mit einem Lenkkopfrohr 14 und einem Hauptrohr 16 ein dreidimensionales Fachwerk, das neben der Lagerung eines Motors in erster Linie die Aufgabe hat, eine verwindungssteife Verbindung zwischen einer Lenkkopfachse 21 und einer durch eine Schwingenlagerung 20 verlaufenden Schwingenachse 22 zu schaffen. Die Lenkkopfachse 21 ist definitionsgemäß eine "erste Achse", die Schwingachse 22 ist definitionsgemäß eine "zweite Achse" im Sinne dieser Erfindung.

Im Sollzustand liegt die Lenkachse 21 in einer Hauptsymmetrieebene 24 des Rahmens, während die Schwingenachse 22 senkrecht auf der Hauptsymmetrieebene 24 steht. Die relative Lage von erster Achse 21 und zweiter Achse 22 zueinander läßt sich beispielsweise in einem kartesischen Koordinatensystem beschreiben, das die Schwingenachse 22 als X-Achse enthält, während die Y- und Z-Achse die Symmetrieebene 24 aufspannen. Es ist jedoch eine Vielzahl von Koordinatentransformationen denkbar, so daß die Geometrie eines Motorradrahmens oder die Lage zweier technisch wichtiger Achsen zueinander auch in einem anderen Koordinatensystem beschrieben werden kann.

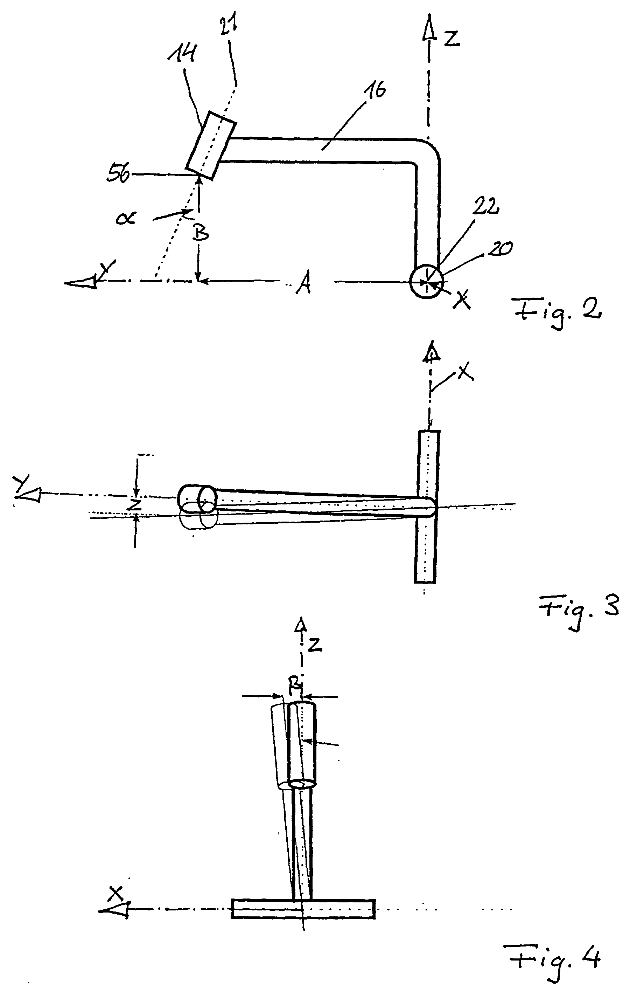

Figur 2 zeigt einen vereinfacht dargestellten Motorradrahmen in Richtung der X-Achse gemäß Figur 1, wobei das Hauptrohr 16 als Lenkkopfrohr 14 mit der Schwinglagerung 20 verbindend dargestellt ist.

Figur 3 zeigt eine Draufsicht des in Figur 2 gezeigten schematisch dargestellten Rahmens und Figur 4 eine Frontansicht des gleichen Rahmens. Die zur Beurteilung der Maßhaltigkeit eines Motorradrahmens relevanten Größen sind der Lenkkopfwinkel α, die Rahmenlänge, üblicherweise durch die in Figur 2 gezeichneten Längen A und B dargestellt, der in Figur 3 eingezeichnete Längsachsenversatz z, der bei einem Einspurfahrzeug im Sollzustand 0 ist, und der in Figur 4 eingezeichnete Sturzwinkel β, der bei einem Einspurfahrzeug, beispielsweise einem Motorrad, im Sollzustand ebenfalls 0 beträgt.

Die genannten Größen sind für das Fahrverhalten eines Zweirades von entscheidender Bedeutung, so daß ein auf Maßhaltigkeit zu überprüfender Rahmen, beispielsweise der eines Unfallfahrzeuges, oder ein neu hergestellter Rahmen insbesondere auf diese Größen hin zu vermessen ist.

Zur Vermessung von Zweiradrahmen sind verschiedene Vorrichtungen bekannt geworden. So ist aus der DE- 2738609 B1 eine Prüf- und Meßlehre zum Feststellen von Verformungen des Rahmens eines Motorrades bekannt geworden, bei der ein voluminöses und unhandliches Gestell auf dem Lenkkopf des Rahmens festgeschraubt wird und die korrekte Lage der Schwingenachse, d.h. der zweiten Achse in der hier gewählten Terminologie, durch an dem Gestell befestigte Zentrierspitzen angezeigt wird. Mit dieser Vorrichtung ist es nicht möglich, das Ausmaß von Abweichungen konkret zu vermessen. Weiterhin ist es nicht möglich, Motorradrahmen der neueren Generation zu vermessen, die keinen physikalisch ausgebildeten Lenkkopf aufweisen, sondern bei denen die Lenkachse als virtuelle Achse physisch nicht vorhanden ist.

Um die Nachteile der als reinen Ausschußlehre wirkenden bekannten Prüf- und Meßlehre zu vermeiden, hat der Anmelder in der EP-0491369 A2 eine Vorrichtung zum Vermessen eines Zweiradrahmens vorgeschlagen, die einen am Lenkerkopf ansetzbaren Teil und beiderseits an der Schwingaufnahme ansetzbare Teile aufweist, wobei zumindest ein Teil mit einem Richtlaser verbunden ist, der beweglich gelagert ist. Durch Ausrichten des sichtbaren Laserstrahls auf bestimmte Ziele, beispielsweise auf an der Schwingenlagerung angebrachte Zentrierspitzen, kann eine Bezugslinie geschaffen werden, auf der ein Abstand gemessen werden kann. Die bekannte Vorrichtung unter Verwendung eines Laserstrahls ist jedoch immer noch mit dem Nachteil behaftet, daß manuelle Meßvorgänge, insbesondere Entfernungsmessungen zwischen zwei Punkten mittels eines Bandmaßes o.ä., Teil des Meßverfahrens bilden, wodurch es einerseits mit höheren Meßunsicherheiten behaftet, andererseits umständlich handhabbar wird.

Es sind weiterhin unter Verwendung von Laserrichtstrahlen arbeitende Vorrichtungen und Verfahren zum Vermessen von Unfallkarosserien von Kraftfahrzeugen bekannt, bei denen um das zu vermessende Fahrzeug herum aufgestellte Stative verwendet werden, auf denen jeweils ein Lasergerät befestigt ist. Ein solches Verfahren is beispielsweise aus der internationalen Anmeldung WO 90/1-0188 bekannt. Theoretisch lassen sich mit einer solchen Methode unter Verwendung bekannter Triangulationsverfahren und Auswertemethoden auch die Lage einer ersten Achse relativ zu einer zweiten Achse, beispielsweise eines geparkten Motorrades, bestimmen. Dabei haftet diesem Verfahren jedoch der Nachteil an, daß es sehr aufwendig und platzbedürftig ist. Weiterhin läßt sich dieses Verfahren nicht automatisieren.

Die WO 87/06353 zeigt ein Verfahren zum Vermessen eines dreidimensionalen Raumes mittels zweier Videokameras, die mit einem bekannten Winkel zueinander angeordnet sind. In dem dreidimensionalen Raum sind Kontrollpunkte angeordnet, deren Objektkoordinaten vermessen und deren Bildkoordinaten von den Videokameras ermittelt werden. Auf Basis der Bildkoordinatenwerte und der Raumkoordinatenwerte der Kontrollpunkte werden Orientierungsparameter bestimmt, aus denen die unbekannten Raumkoordinaten der betrachteten Punkte mathematisch ermittelt werden können.

Der Erfindung liegt daher die Aufgabe zugrunde eine Vorrichtung und ein Verfahren zum Vermessen der Lager einer ersten Achse relativ zu einer zweiten Achse zu schaffen, die eine größere Meßgenauigkeit und einen höheren Bedienungskomfort ermöglichen, als bisherige Meßvorrichtungen - bzw. Verfahren - und die sich leichter automatisieren lassen und zumindest als Grundlage für die Vermessung auch von insbesondere lenkkopflosen Raumkonstruktionen oder sonstigen Meßobjekten geeignet sind, bei denen zumindest eine der Achsen physisch nicht unmittelbar in Erscheinung tritt, sondern eine virtuelle Drehachse im Raum darstellt.

Diese Aufgabe wird durch eine Vorrichtung nach Anspruch 1 oder 2 sowie ein Verfahren nach Anspruch 14 oder 17 gelöst.

Ein wesentliches Merkmal der Erfindung ist also die Verwendung an sich bekannter photogrammetrischer Methoden zur Bestimmung der relativen Lage zweier Achsen zueinander, die durch anbringbare Markierungen, d.h. Meßkörper für zwei Bildaufnehmer identifizierbar gemacht werden. Dabei können die Meßkörper passiv, d.h. lediglich reflektierend, oder aktiv, d.h. selbstleuchtend sein. Als Bildaufnehmer sind aus Kostengründen insbesondere CCD-Aufnehmer geeignet, die elektrische Signale liefern, die sich als Videosignale problemlos mit herkömmlichen Methoden weiterverarbeiten lassen. Die Auswertung der von beiden Bildaufnehmern gelieferten Videosignale erfolgt dabei mit Hilfe bekannter photogrammetrischer Methoden, so daß sich die Lage der zwei mit festem räumlichen Bezug zur ersten Achse angebrachten Meßkörper in einem vorher definierten kartesischen Koordinatensystem bestimmen läßt. Da die Lage der beiden voneinander beabstandeten Bildaufnehmer (CCD-Aufnehmer) in bezug auf die zweite Achse und damit in bezug auf das Koordinatensystem bekannt ist, ist damit auch die gegenseitige relative Lage der beiden Achsen zueinander bekannt.

Erfindungsgemäß ist bevorzugt vorgesehen, daß die Positionierungsmittel eine mechanische Verbindung aufweisen, die den Basisabstand zwischen den beiden Bildaufnehmern festlegt, wobei die mechanische Verbindung bevorzugt das Querhaupt eines U-förmigen Bügels ist, dessen beide Schenkel jeweils ein mit der zweiten Achse, d.h. bei einem Motorradrahmen mit der Schwingenachse, fluchtend ausrichtbares Ansatzteil aufweisen. Eine solche Ausgestaltung ermöglicht es, den erfindungsgemäß vorgesehenen definierten räumlichen Bezug zwischen den Bildaufnehmern und der zweiten Achse insbesondere bei einem Motorrad mit wenigen Handgriffen einfach und doch präzise herzustellen. Der mit Zentrierspitzen auf die Schwingenachse aufgesetzte und ausgerichtete U-förmige Bügel hat als einen letzten Freiheitsgrad noch eine Drehung um die Schwingenachse, die hinsichtlich des Meßverfahrens unschädlich ist und dazu genutzt werden kann, die an der ersten Achse befestigten Meßkörper in den Fangbereich der Bildaufnehmer zu bringen. Während des eigentlichen Meßvorgangs wird der U-förmige Bügel festgelegt, beispielsweise durch sein eigenes Gewicht, oder durch eine Querstrebe o.ä. Vorzugsweise sind die beiden Bildaufnehmer in fester Winkellage mit der den Basisabstand zwischen ihnen festlegenden mechanischen Verbindung, d.h. mit dem Querhaupt, verbunden. Hierdurch wird es möglich, die aus Bildaufnehmern und mechanischer Verbindung, insbesondere U-förmigen Bügel, bestehende Einheit zu kalibrieren.

Zu diesem Zweck wird der U-förmige Bügel auf einem eigens hierfür geschaffenen Paßkörpergestell befestigt, das eine beispielsweise eine Schwingenachse subsituierende Achse enthält. In einiger Entfernung von der ersetzten Schwingenachse, d.h. der Befestigungsachse des Paßkörpergestells, sind Meßkörper (Paßkörper) angeordnet, die zuvor mit einer 3D-Koordinatenmeßmaschine genau vermessen worden sind. Aus dem aus beiden Bildaufnehmern gelieferten Bild der auf diese Weise eingemessenen Meßkörper lassen sich die notwendigen Berechnungskonstanten rückwerts berechnen, so daß die aus U-förmigen Bügel und integrierten Bildaufnehmern gebildete Einheit ist. Wird die Einheit nun zum Vermessen benutzt, so läßt sich aus dem Bild der beiden Meßkörper, die Lage der ersten Achse mittels bekannter photogrammetrischer Methoden berechnen, sofern die beiden Markierungen (Meßkörper) in Verlängerung der ersten Achse, insbesondere der Lenkkopfachse eines herkömmlichen Motorradrahmens, angeordnet sind.

Zur Erhöhung der Genauigkeit kann dabei vorgesehen sein, daß mehr als zwei Meßkörper auf der ersten Achse angeordnet sind, und daß an Stelle des Differenzvektors ein in der Achse liegender Vektor mittels einer Fehlerausgleichsrechnung bestimmt wird.

Das bisher beschriebene Verfahren eignet sich jedoch nur zur Vermessung von Meßobjekten, bei denen es möglich ist, zwei Meßkörper in Verlängerung der ersten Achse anzubringen. Dies ist beispielsweise nicht möglich bei sogenannten lenkkopflosen Rahmenkonstruktionen, bei denen die Vorderradgabel eines Motorrades um eine virtuelle Drehachse dreht, die durch zwei Kugelgelenke vorgegeben ist, physisch als solche aber nicht existent ist. Auch bei einziehbaren Flugzeugfahrwerken o.ä. treten ähnliche Problemstellungen auf.

Die Erfindung schlägt daher weiterhin vor, die photogrammetrische Auswertung zu verfeinern und schafft ein Verfahren unter Verwendung einer erfindungsgemäßen Vorrichtung mit folgenden Schritten:
- Anbringen von zumindest zwei Markierungen (Meßkörpern) mit radialem Abstand von der ersten Achse (Lenkkopfachse) an einem um die Achse schwenkbaren Bauteil (Lenker), so daß sie bei Ausschlag des Lenkers jeweils Kreisbögen mit verschiedenen Mittelpunkten beschreiben, die auf der zu ermittelnden ersten Achse liegen,
- Herstellen eines festen räumlichen Bezugs zwischen mindestens zwei Bildaufnehmern, der zweiten Achse und einem feststehendem Koordinatensystem mittels optischer oder mechanischer Positionierungsmittel,
- Berechnen der Ortsvektoren beider Meßkörper in einer ersten Stellung aus den Bilddaten von mindestens zwei Bildaufnehmer mittels photogrammetrischer Berechnungsmethoden,
- Verschwenken des Lenkers in eine andere Stellung, so daß die Meßkörper auf besagten Kreisbögen in eine andere Stellung verfahren werden,
- wiederholte Berechnung der Ortsvektoren und erneute Verschwenkung bis die Ortsvektoren und damit Meßkörperpositionen in mindestens drei Stellungen bekannt sind,
- Berechnen der beiden von den Meßkörpern beschriebenen Kreise aus jeweils drei bekannten Ortsvektoren mit den Mitteln der analytischen Geometrie,
- Berechnen der Kreismittelpunkte,
- Berechnen des auf der ersten Achse liegenden Differenzvektors der Ortsvektoren der Kreismittelpunkte.
- wobei die beiden Bildaufnehmer in fester Winkellage mit einer den Basisabstand zwischen ihnen festliegenden mechanischen Verbindung verbunden sind.

Dabei geht die beschriebene Weiterentwicklung des erfindungsgemäßen Verfahrens davon aus, daß zwei in räumlichen Abstand voneinander und von der ersten Achse an einem um die Achse schwenkbaren Bauteil angebrachte Markierungen beim Verschwenken auf einem Kreisbogen verfahren werden. Sind jeweils drei Punkte eines Kreisbogens mittels photogrammetrischer Methoden bestimmt, so ist die Lage des Kreises in dem dem Meßverfahren zugrunde liegenden kartesischen Koordinatensystem, das seinerseits in bezug auf die zweite Achse definiert angeordnet ist, bekannt. Sind die Kreisbögen bekannt, so sind die Kreise selbst und damit ihre Mittelpunkte berechenbar. Der Differenzvektor der Ortsvektoren der Kreismittelpunkte legt dabei die gesuchte erste Achse fest.

Die Grundidee der Erfindung läßt sich insbesondere für den vorran gig angestrebten Einsatzzweck, einen verunfallten Motorradrahmen auf Maßhaltigkeit zu überprüfen, weiter verfeinern.

So kann beispielsweise vorgesehen sein, daß die beiden Bildaufnehmer mit der den Basisabstand zwischen ihnen festlegenden mechanischen Verbindung, d.h. beispielsweise mit dem Querhaupt eines U-förmigen Bügels, mittels einer schwenkbaren Lagerung verbunden sind, deren Schwenkachse beispielsweise senkrecht auf dem Basisabstand stehen kann. Eine solche Ausgestaltung ermöglicht es, unterschiedlichen Rahmenlängen Rechnung zu tragen, indem der Fangbereich beispielsweise von CCD-Aufnehmern entsprechend angepaßt wird.

Weiterhin kann für eine einfache Handhabung ein Meßkörperhalter vorgesehen sein, der auf den Lenkkopf eines Zweiradrahmens aufsetzbar ist und zumindest zwei Meßkörper in der ersten Achse positioniert. Dabei ist unter erster Achse definitionsgemäß die Lenkachse zu verstehen.

Insbesondere bei Ausgestaltung der mechanischen Verbindung in Form eines U-förmigen Bügels kann eine zwischen Ansatzteil und Schwingenlagerung einfügbare Paßhülse vorgesehen sein, um eine Verschiebbarkeit des U-förmigen Bügels in Richtung der X-Achse, d.h. in Richtung der Schwingenachse aufzuheben und damit ein eindeutiges Koordinatensystem festzulegen.

Um insbesondere bei Zweiradrahmen nicht nur die relative Lage der beiden hauptsächlich zu vermessenden Achsen bestimmen zu können, sondern auch andere Teile des Rahmens in bezug auf eine Symmetrieebene des Rahmens vermessen zu können, wie beispielsweise Motorhalterungen o.ä., kann vorgesehen sein, an dem Querhaupt des Bügels einen Richtlaser zu lagern, der um eine zur zweiten Achse (Schwingenachse) parallele Achse schwenkbar ist, und der eine zur Symmetrieebene des Rahmens parallele Bezugsebene aufspannt. Dabei ist der Abstand der von dem schwenkbaren Laserstrahl aufgespannten Bezugsebene zur Symmetrieebene mittels auf der Achse angeordneter Meßmittel bzw. Meßeinteilungen ablesbar.

Bei einer weiterhin denkbaren Ausführungsform der Erfindung sind die Positioniermittel nicht mechanisch, sondern optisch ausgebildet. So kann beispielsweise vorgesehen sein, daß die Positionierungsmittel optische Leitmittel umfassen, um die zweite Achse mit festen räumlichen Bezug zu den beiden Bildaufnehmern auszurichten.

So kann es beispielsweise vorgesehen sein, die Bildaufnehmer mittels mechanischer Trägermittel bei einer im wesentlichen parallel zu einem Werkstattboden verlaufenden zweiten Achse (Schwingenachse) des zu vermessenden Objektes dergestalt über den Werkstattboden zu positionieren, daß das Meßobjekt, insbesondere ein Zweirad, zwischen ihnen geparkt werden kann, und daß die optischen Positioniermittel aus rechts und links des Zweirads angeordneten Richtlasern bestehen, die in festem räumlichen Bezug zu Werkstattboden und Bildaufnehmern angeordnet sind. Nachteilig ist daß das häufig schwere Motorrad oder andere Meßobjekte ausgerichtet werden müss, was mit erheblichen Aufwand verbunden ist.

Alternativ kann daher vorgesehen sein, daß optische Positioniermittel in Form von zwei weiteren Bildaufnehmern vorhanden sind, die mit den ersten Bildaufnehmern im festen räumlichen Bezug stehen. Dabei sind die ersten Bildaufnehmer wie bereits erwähnt auf die erste zu vermessende Achse ausgerichtet, während die zweiten Bildaufnehmer auf die zweite Achse, d.h. die Schwingenachse ausgerichtet sind. Auf der Schwingenachse bzw. in ihrer Verlängerung werden zur Durchführung dieser Variante des erfindungsgemäßen Meßverfahrens ebenfalls Markierungen, d.h. Meßkörper, angebracht.

Das zweite Paar von Bildaufnehmern liefert Videosignale, aus denen sich die Lage der an der zweiten Achse befestigten Meßkörper und die Lage dieser Achse relativ zu dem zweiten Paar von Bildaufnehmern berechnen läßt. Da das zweite Paar von Bildaufnehmern mit dem ersten Paar von Bildaufnehmern in einem festen räumlichen Bezug steht, wird so ein räumlich definiertes Koordinatensystem geschaffen, auf das die Lage der ersten, zu vermessenden Achse bezogen werden kann.

Erfindungsgemäß kann weiterhin selbstverständlich vorgesehen sein, daß die in einem Koordinatensystem gewonnenen Daten auf ein anderes Koordinatensystem umgerechnet werden.

So kann es beispielsweise vorgesehen sein, die gemessenen Daten auf ein Koordinatensystem umzurechnen, das die Unterkante des Lenkkopfrohres eines bekannten konventionellen Motorradrahmens enthält. Auf diese Weise ist auch eine Berechnung der eingangs in Figur 2 dargestellten Rahmenlängen bzw. Rahmenhöhe möglich.

Die Erfindung wird im folgenden anhand von in der Zeichnung dargestellten Ausführungsbeispielen näher erläutert. In der Zeichnung zeigen:
- Figur 1 -: eine perspektivische Ansicht eines Motorradrahmens mit einer durch ihn verlaufenden Symmetrieebene und einem mit ihm verbundenen kartesischen Koordinatensystem,
- Figur 2 -: eine Seitenansicht eines schematisch dargestellten Motorradrahmens,
- Figur 3 -: eine Draufsicht des in Figur 2 dargestellten Motorradrahmens,
- Figur 4 -: eine Frontansicht des in Figur 2 dargestellten Motorradrahmens,
- Figur 5 -: eine perspektivische Ansicht einer ersten Ausführungsform der Erfindung,
- Figur 6 -: einen Schnitt in der X-Z-Ebene in Figur 5,
- Figur 7 -: einen Meßkörperhalter gemäß der Erfindung,
- Figur 8 -: eine alternative Ausführungsform eines Meßkörperhalters gemäß der Erfindung,
- Figur 9 -: eine schematische Seitenansicht eines Motorrades mit einer lenkkopflosen Rahmenkonstruktion,
- Figur 10 -: eine schematische perspektivische Darstellung zur Erläuterung eines erfindungsgemäßen Meßverfahrens gemäß einer zweiten Ausführungsform der Erfindung,
- Figur 11 -: eine weitere alternative Ausführungsform eines erfindungsgemäßen Meßbügels,
- Figur 12 -: eine schematische Darstellung einer alternativen Verwendungsmöglichkeit eines erfindungsgemäßen Meßbügels,
- Figur 13 -: eine alternative Ausführungsform eines erfindungsgemäßen Meßbügels, und
- Figur 14 -: eine weiterhin abgeänderte Ausführungsform eines erfindungsgemäßen Meßbügels mit vier Bildaufnehmern zum Vermessen einer Achsschenkellenkung.

Die Figuren 1 bis 4 sind weitgehend bei der Diskussion des Standes der Technik gewürdigt worden. Es sei noch einmal darauf hingewiesen, daß das in Figur 1 eingezeichnete kartesische Koordinatensystem in bezug auf den zu vermessenden Rahmen auch anders gelagert sein kann, insbesondere längs der X-Achse verschoben sein kann. Die Figuren 2 bis 4 dienen im wesentlichen der Erläuterung der relevanten Meßgrößen zur Erfassung der Maßhaltigkeit eines Zweiradrahmens. Die in Figur 2 eingezeichneten Bezugsgrößen bzw. -längen "A" und "B" sind in der Praxis so definiert, daß die Strecke "A" bei einem fahrfertigen, mit einem 75 kg schweren Fahrer belasteten Motorrad waagerecht zur Fahrbahnoberfläche verläuft.

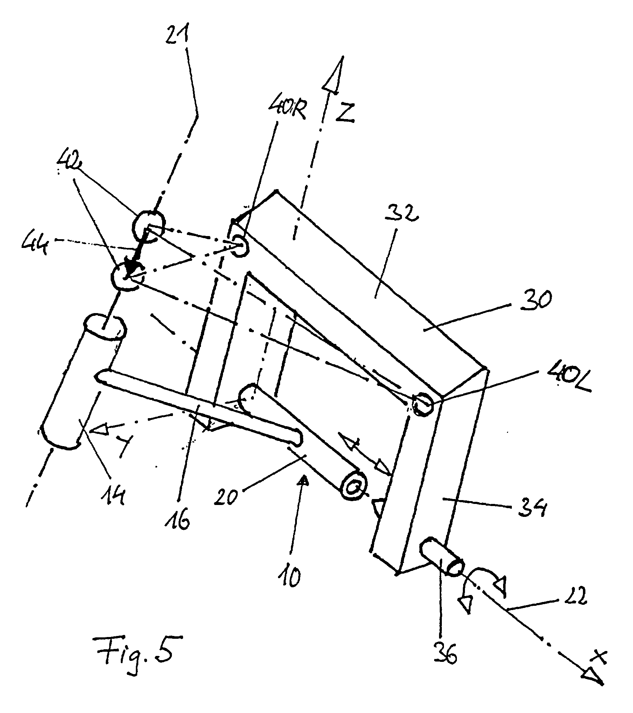

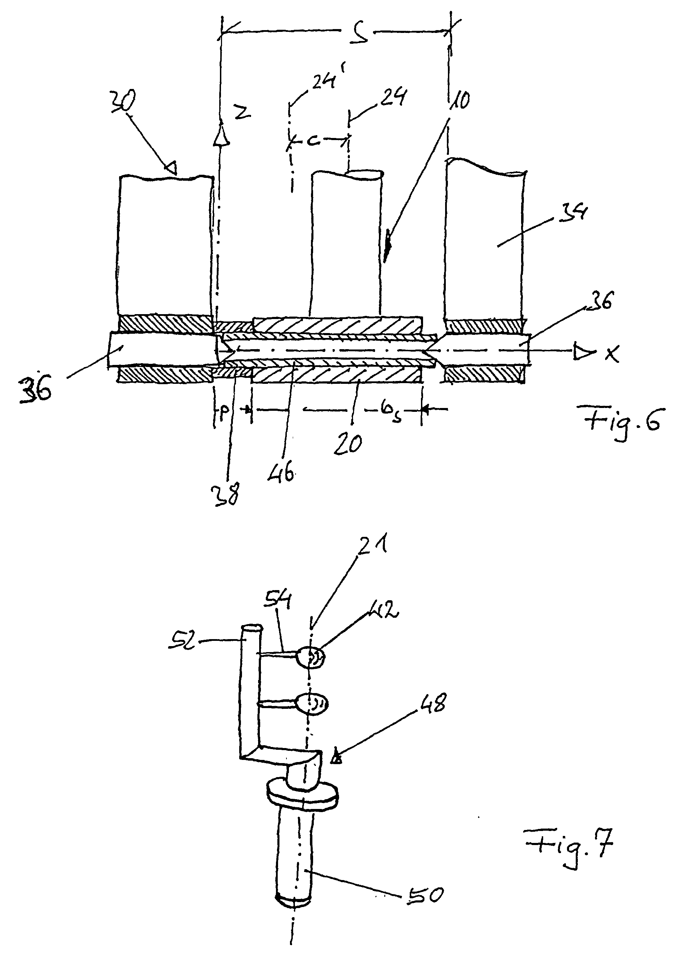

Figur 5 zeigt eine perspektivische schematische Darstellung eines auf einen zu vermessenden Motorradrahmen 10 aufgesetzten erfindungsgemäßen, U-förmigen Meßbügels 30. Der Meßbügel 30 besteht im wesentlichen aus einem Querhaupt 32, von dem sich zwei Schenkel 34 nach unten erstrecken. In den Schenkeln 34 sind Zentrierspitzen 36 verschieblich gelagert. Die Zentrierspitzen 36 greifen in die entsprechenden Bohrungen der Schwingenlagerung 20 ein, so daß dem U-förmige Meßbügel 30 noch zwei Freiheitsgrade relativ zu dem zu vermessenden Rahmen 10 verbleiben. Diese Freiheitsgrade sind eine Drehung um die X-Achse und eine Verschiebung längs der X-Achse, wie in Figur 5 durch Pfeile angedeutet. Wie Figur 6 zeigt, kann die Verschiebung in Richtung der X-Achse durch Verwendung einer Paßhülse 38 aufgehoben werden, so daß ein definiertes Koordinatensystem geschaffen wird, dessen Ursprung im Schnittpunkt zwischen der Schwingenachse und der Außenfläche der Paßhülse liegt. Auf diese Weise wird ein definierter räumlicher Bezug zwischen der Schwinglagerung 20 des zu vermessenden Rahmens 10 und dem Meßbügel 30 geschaffen. Die verbleibende Drehung um die X-Achse hat unkritischen Einfluß, während des eigentlichen Meßvorgangs wird die Drehung jedoch dadurch unterbunden, daß der Meßbügel beispielsweise mittels einer zusätzlichen Strebe am Rahmenheck des zu vermessenden Motorrades abgestützt wird.

In den beiden äußeren Enden des Querhauptes 32 sind CCD-Bildaufnehmer 40L und 40R angeordnet. Wegen des unterschiedlichen Blickwinkels der Bildaufnehmer 40L und 40R läßt sich mit den Methoden der Stereometrie bzw. Photogrammetrie aus den von den Bildaufnehmern gelieferten Videosignalen die Entfernung eines anvisierten Punktes und seine Lage in einem bekannten Koordinatensystem errechnen, vorausgesetzt die fest installierten CCD-Bildaufnehmer sind in bezug auf ihren zwischen ihnen liegenden Abstand und die Winkelstellung zuvor eingemessen worden, indem eine bekannte Anordnung von Punkten in einem bekannten Koordinatensystem zunächst vermessen worden ist (Verwendung eines sogenannten Paßkörpergestells).

Bei der Eichung der beiden CCD-Bildaufnehmer 40L und 40R wird der Meßbügel 30 in die Vermessung einbezogen, so daß sich aus der Auswertung der von den Bildaufnehmern gelieferten Videosignale gewonnenen Informationen innerhalb eines bestimmten Koordinatensystems die Lage von anvisierten Punkten in einem mit der Schwingenachse X verbundenen Koordinatensystem bestimmen läßt.

Um die Lage der Lenkachse 21 in einem definierten Koordinatensystem bestimmen zu können, werden erfindungsgemäß zumindest zwei Meßkörper 42 so angeordnet, daß ihre Mittelpunkte auf der Lenkachse 21, d.h. auf der "ersten Achse" in der hier gewählten Terminologie liegen. Die Meßkörper sind vorzugsweise Kugeln, da diese bei einer Projektion aus einem beliebigen Bildwinkel immer als Kreis abgebildet werden und deswegen leicht zu vermessen sind.

Sobald durch photogrammetrische Bestimmung der Lage der beiden Meßkörper 42 und ihre Ortsvektoren in einem definierten Koordinatensystem bekannt sind, läßt sich durch Differenzbildung dieser beiden Ortsvektoren ein auf der Achse 21 liegender und sie hiermit beschreibender Differenzvektor 44 ermitteln. Dieser gibt die Lage der Achse 21, d.h. einer ersten Achse, in bezug auf eine zweite Achse 22 bekannter Lage an.

Es sei darauf hingewiesen, daß es theoretisch denkbar ist, mit nur einer CCD-Kamera 40L oder 40R zu arbeiten, die nach einem erfolgten ersten Meßdurchgang in die zweite Position umgesetzt wird.
Eine solche Ausführungsform soll als verschlechterte Ausführungsform im Sinne dieser Erfindung verstanden werden.

Figur 6 zeigt die Verwendung der Paßhülse 38, um den Meßbügel 30 bzw. seine Schenkel 34 im Hinblick auf eine Verschieblichkeit auf der X-Achse definiert positionieren zu können. Durch Umsetzen der Paßhülse 38 in den Zwischenraum zwischen dem anderen Schenkel 34 und der Schwinglagerung 20 wird eine zweite Meßstellung geschaffen, die die Symmetrieebene 24 des Rahmens 10 in bezug auf den Meßbügel 30 in eine zweite Stellung 24' verlegt. Der einfacheren zeichnerischen Darstellung wegen ist in Figur 6-nicht der Meßbügel 30 in seiner - wegen der umgesetzten Paßhülse 38 - verschobenen - Stellung gezeichnet, sondern die Symmetrieebene 24 ist als in der Symmetrieebene 24' liegend angenommen, was den gleichen relativen Versatz darstellt. Der ermittelbare Abstan zwischen den Lagen der Symmetrieebene 24 und 24' c kann dabei zur Bestimmung des Maßes herangezogen werden, um das die Symmetrieebene 24 von der Z-Achse in Figur 6 beabstandet ist. Die Breite bₛ der Schwingenlagerung ergibt sich nämlich zu S - 2 p - c, worin S die lichte Schwingenweite ist und p die Breite der Paßhülse. Der Abstand der Symmetrieebene 24 zu der in Figur 6 gezeichneten Z-Y-Ebene beträgt dann p + bₛ/2.

Zur Ausrichtung der Zentrierspitzen 36 kann eine zusätzliche Zentrierhülse 46 dienen, die in die Schwinglagerung 20 eingeschoben ist.

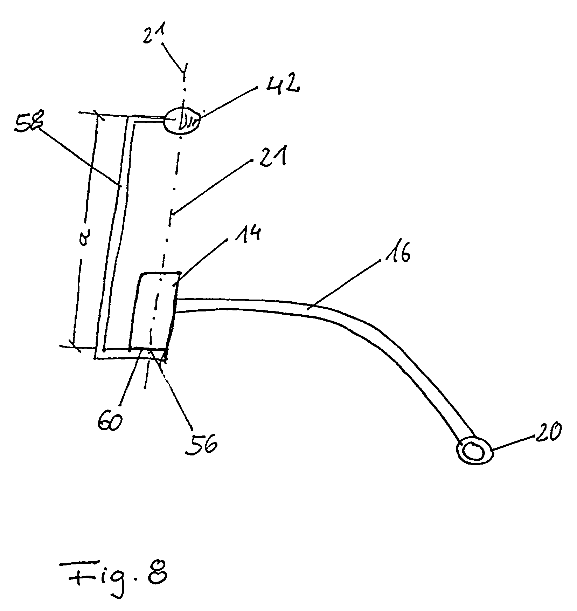

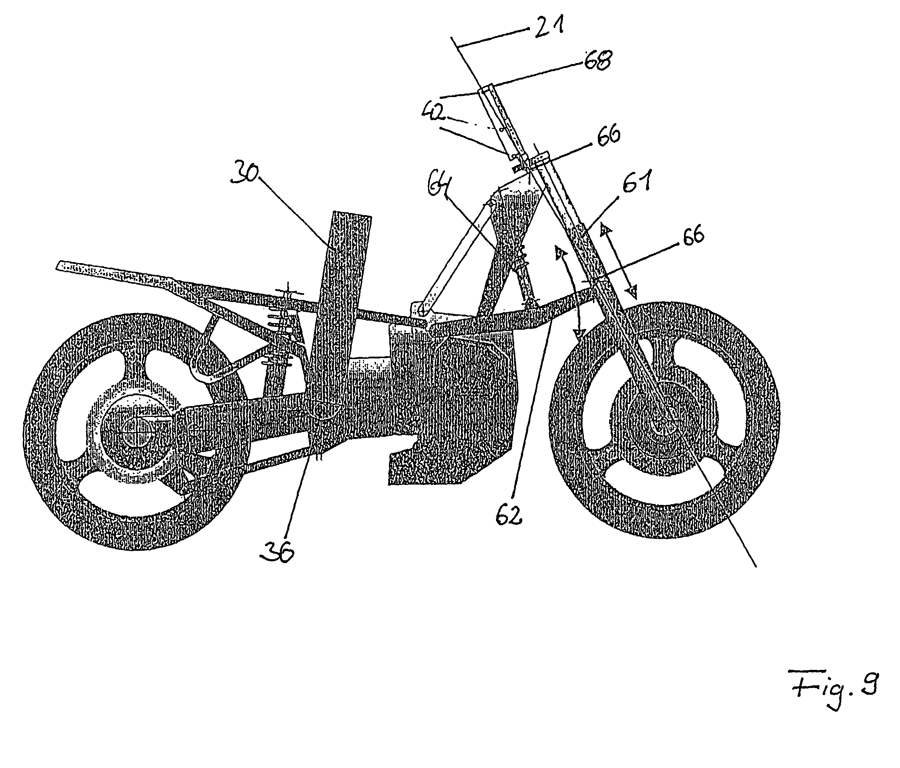

Figur 7 zeigt eine Meßkörperhalteranordnung um zwei Meßkörper 42 auf einer Achse 21 positionieren zu können. Der Meßkörperhalter 48 weist ein Zentrierzapfen 50 auf, der beispielsweise in den Innenringen der Lenkkopflager eines Motorradrahmens geführt werden kann. An den Zentrierzapfen 50 schließt sich ein L-förmiger Halter 52 an, von dem aus die Meßkörper 42 tragende Ausleger 54 abstehen. Wie Figur 2 zeigt, sind charakteristische Größen für die Vermaßung eines Motorradrahmens die Längen A und B. Zu ihrer Berechnung ist Kenntnis der Lage des Schnittpunktes zwischen der Lenkachse 21 und der Ebene der Unterseite des Steuerkopfrohres 14 notwendig. Eine direkte Vermessung dieses Schnittpunktes mit in einem Meßbügel 30 angeordneten CCD-Kameras und einem nachgeschalteten Computer zur Auswertung der gelieferten Videosignale ist nicht möglich, da eine im besagten Schnittpunkt 56 angeordnete Markierung in Form eines Meßkörpers für die wie in Figur 5 dargestellt positionierten Bildaufnehmer nicht sichtbar ist. Um die Position des Schnittpunktes 56 in dem bekannten Koordinatensystem vermessen zu können, wird erfindungsgemäß ein alternativer Meßkörperhalter 58 für einen auf der Lenkachse 21, d.h. einer ersten Achse, positionierten Meßkörper 42 vorgeschlagen. Dieser alternative Meßkörperhalter 58 zeichnet sich dadurch aus, daß er eine Anlagefläche 60 zur Anlage einer unteren Stirnfläche eines Lenkkopfrohres 14 aufweist, sowie einen in den Lenkkopf hineinragenden, in Figur 8 nicht sichtbaren Zentrierzapfen 50, ähnlich dem in Figur 7 dargestellten. Der Abstand zwischen dem Mittelpunkt des Meßkörpers 42 und der Anlagefläche 60 ist als Aufbaumaß "a" bekannt, so daß bei bekannter Lage der Achse 21 und des Maßes a der Schnittpunkt 56 bekannt ist. Mit dieser Kenntnis lassen sich dann die Längen A und B berechnen. Bei einer alternativen Ausführungsform ist es auch denkbar, auf den Zentrierzapfen 50 des Meßkörperhalters 58 zu verzichten. Der zur Bestimmung des Aufbaumaßes "a" verwendete Meßkörper 42 liegt dann nicht in der ersten Achse 21, sondern um einen Betrag von dieser entfernt, der in etwa dem halben Durchmesser des Lenkkopfrohres entspricht. Der hierdurch verursachte Fehler bei der Bestimmung des Aufbaumaßes "a" bzw. bei der Bestimmung des Schnittpunktes 56 ist vernachlässigbar.

Figur 9 zeigt schematisch die Darstellung einer Seitenansicht ei-nes Motorrades mit einer lenkkopflosen Rahmenkonstruktion. Hierunter ist eine Rahmenkonstruktion zu verstehen, bei der eine bekannte Teleskopgabel 61 als Vorderradaufhängung nicht durch zwei herkömmliche in einem Lenkkopfrohr gelagerte Gabelbrücken gelagert ist, sondern mittels einer freigeführten Schwinge 62, an der sich ein Federungs- und Dämpfungselement 64 abstützt. Die Lenkachse 21, d.h. die Achse um die Rahmen 10 und Vorderradführung 61 miteinander schwenkbar gekoppelt sind, ist daher nicht als physisch existente Achse vorhanden, sondern lediglich durch die Lage der beiden Lager 66 definiert. Da kein Lenkkopfrohr vorhanden ist, lassen sich Meßkörperhalterungen, wie sie in Figur 7 und Figur 8 dargestellt sind, nicht verwenden. Auch eine bekannte Vorrichtung, wie sie der Anmelder im Stand der Technik vorgeschlagen hat, läßt sich bei einer solchen Rahmenkonstruktion nicht verwenden, um die relevanten Rahmendaten zu ermitteln. Um dennoch eine Vermessung der Lenkachse 21 zu ermöglichen, wird erfindungsgemäß vorgeschlagen, einen zumindest zwei Meßkörper 42 tragenden Meßkörperhalter 68 so beispielsweise mit dem Lenker oder einem ähnlichen, mit der Vorderradaufhängung zusammen schwenkbar verbundenen Teil zu verbinden, daß sich bei einem Drehen des Lenkers o.ä. die Meßkörper 42 auf Kreisbögen bewegen.

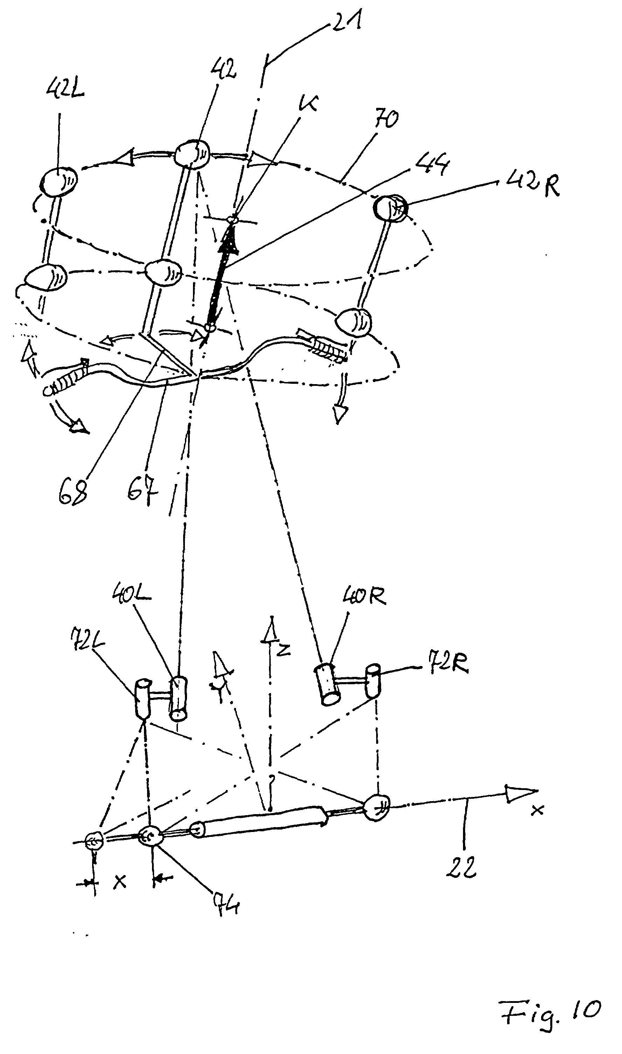

Das zur Auswertung verwendete Verfahren ist in Figur 10 schematisch dargestellt. Auf einem Lenker 67 eines Motorrades ist ein Meßkörperhalter 68 befestigt, der zwei Meßkörper 42 trägt, die sich auf Kreisbögen 70 bewegen, sobald der Lenker 67 gedreht wird. Erfindungsgemäß werden nun die Meßkörper 42 in zwei zusätzlichen Stellungen 42R und 42L vermessen, so daß zu jedem Meßkörper 42 drei Positionen bekannt sind, von denen man weiß, daß sie auf einem Kreis liegen. Demgemäß ist der Kreis als solcher in dem bekannten Koordinatensystem definiert und mit ihm auch sein Mittelpunkt K. Der Differenzvektor 44 der Ortsvektoren der beiden Kreismittelpunkte K des oberen und des unteren Kreises, auf dem sich jeweils der obere und untere Meßkörper 42 bewegt, definiert die Lenkachse 21. Um die Lage der Meßkörper 42 in einem bekannten kartesischen Koordinatensystem mit einer X-, Y- und einer Z-Achse zu ermitteln, wie in Figur 10 dargestellt, werden Bildaufnehmer 40L und 40R eingesetzt, deren Videosignale in bekannter Weise mittels eines Computers unter zu Hilfenahme photogrammetrischer Methoden ausgewertet werden.

Um den räumlichen Bezug zwischen den beiden ersten Bildaufnehmern 40L und 40R zur zweiten (X-Achse) 22 zu schaffen, können, wie in Figur 5 gezeigt, mechanische Positionierungsmittel in Form eines U-förmigen Bügels verwendet werden. In Figur 10 ist eine alternative Möglichkeit dargestellt, bei der optische Positionierungsmittel in Form eines zweiten Paares von Bildaufnehmern 72L und 72R verwendet werden. Diese Bildaufnehmer sind auf die zweite Achse 22 ausgerichtet und stehen in festen räumlichen Bezug zu jeweils den ersten Bildaufnehmern 40L und 40R. Auf der zweiten Achse 22, d.h. auf der Schwingenachse eines Motorrades, werden Meßkörper 74 angeordnet, die eine Identifikation der zweiten Achse 22 ermöglichen. Die in bekannten räumlichen Bezug zu den ersten Bildaufnehmern 40L und 40R positionierten zweiten Bildaufnehmer 72L und 72R ermöglichen somit eine optische Lagerung der ersten Bildaufnehmer 40L und 40R in Bezug auf die zweite Achse 22. Um eine Verschiebung in Richtung der X-Achse und damit die Lage der Y-Z-Ebene festlegen zu können, können zwei auf der Achse X angeordnete Meßkörper 74 in einem definierten Abstand x voneinander angeordnet sein.

Das in Figur 10 schematisch dargestellte Verfahren ermöglicht eine vollautomatische Vermessung eines Motorrades, das beispielsweise zwischen zwei auf einem Werkstatt angeordneten Säulen geparkt wird, in denen jeweils ein erster Bildaufnehmer 40L, 40R und ein zweiter Bildaufnehmer 72L und 72R angeordnet ist. Durch eine Vermessung der zweiten Achse mittels der Videosignale der zweiten Bildaufnehmer 72L und 72R wird zunächst die Lage der zweiten Achse 22 vermessen und damit ein Koordinatensystem festgelegt, auf das die Lage der ersten Achse 21, auf die Bildaufnehmer 40L und 40R ausgerichtet sind, bezogen wird.

Wird das in Figur 10 schematisch dargestellte Verfahren anstelle mit einer optischen Lagerung, wie im unteren Teil von Figur 10 dargestellt, mit einer mechanischen Lagerung, wie in Figur 5 dargestellt, verwendet, so ist eine dynamische Messung, d.h. eine Messung am fahrenden Motorrad denkbar. So ist beispielsweise möglich, während des Fahrbetriebs eine Verformung des Steuerkopfes bei Vollbremsung oder Lenkerflattern bei hohen Geschwindigkeiten unter Verwendung von Hochgeschwindigkeits-CCD-Kameras zu erfassen.

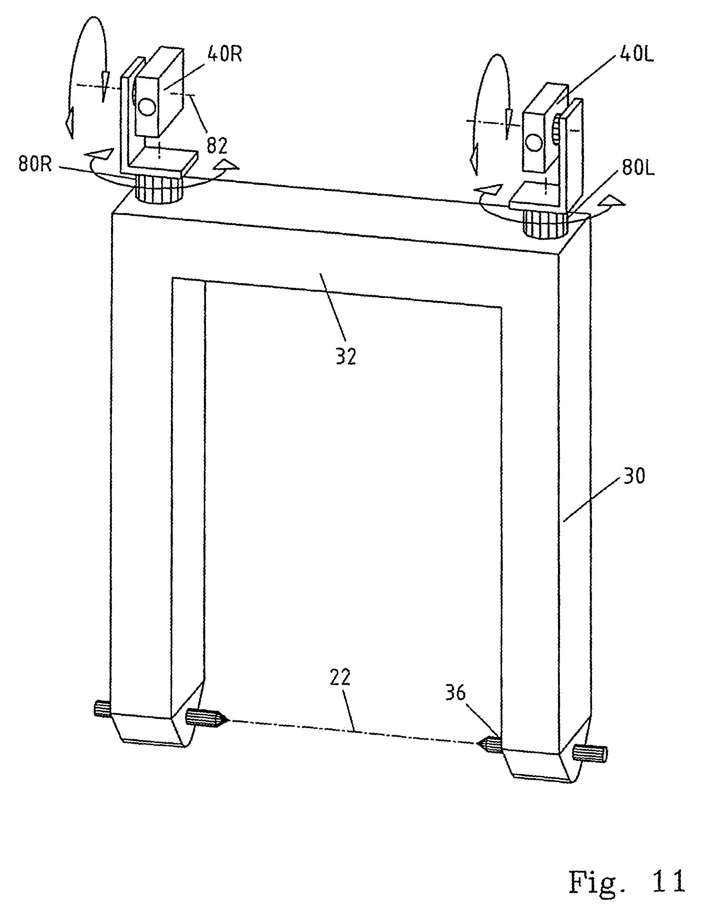

Figur 11 zeigt schematisch einen U-förmigen Meßbügel, wie auch in Figur 5 dargestellt, bei dem die Bildaufnehmer, d.h. zwei CCD-Kameras 40L und 40R nicht festmontiert sind, sondern auf Drehtischen 80L und 80R angeordnet sind. Die Drehtische 80L und 80R erlauben eine Verschwenkbarkeit der CCD-Kameras 40L und 40R um auf dem Querhaupt 32 und damit auf der mechanischen Verbindung zwischen ihren senkrecht stehende Drehachsen. Auf diese Weise wird es ermöglicht, ohne Umsetzen des Meßbügels 30 auch im Heckbereich des Rahmens liegende Punkte zu vermessen, wie beispielsweise eine Hinterradachse, die in einer Schwinge geführt ist. Zusätzlich können die Drehtische 80L und 80R einer Verschwenkbarkeit der Kameras 40L und 40R um eine zur mechanischen Verbindung 32 (Querhaupt) parallele Achse 82 ermöglichen, um den Fangbereich der Kameras zu erweitern.

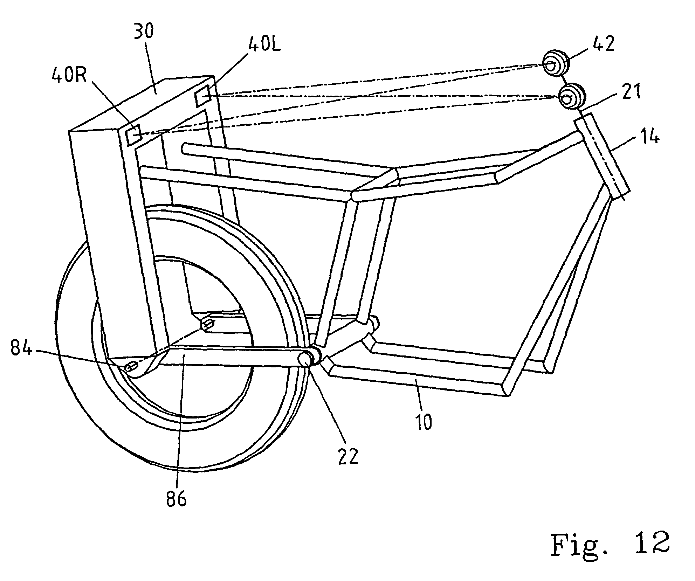

Figur 12 zeigt eine alternative Verwendungsweise eines erfindungsgemäßen Meßbügels 30 mit zwei integrierten CCD-Bildaufnehmern 40L und 40R. Anstatt an der Schwingachse 22 ist der Meßbügel an einer Hinterradsachse 84 eingesetzt, so daß die Hinterradachse "zweite Achse" im Sinne dieser Erfindung wird. Auf diese Weise wird auch eine Hinterradschwinge 86 und eventuelle Deformationen derselben in den Meßvorgang einbezogen.

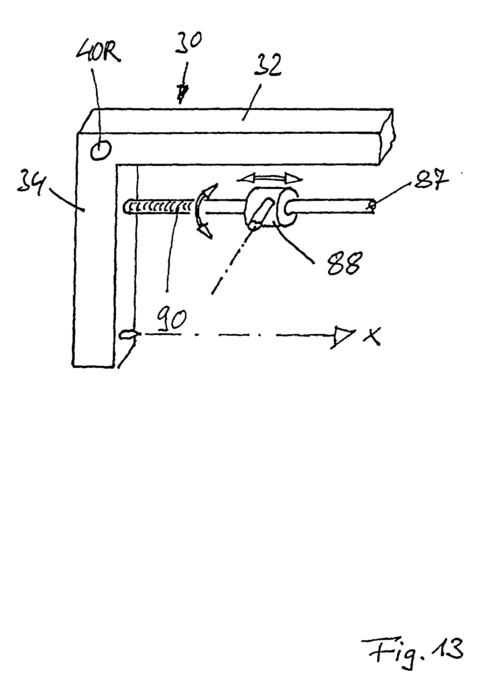

Figur 13 zeigt eine alternative Ausführungsform eines erfindungsgemäßen Meßbügels 30, bei dem eine zusätzliche Gewindestange oder Achse 87 parallel zur X-Achse und damit zum Querhaupt 32 des Bügels angeordnet ist. Auf der X-Achse ist ein Richtlaser 88 verfahrbar angeordnet, der um die Achse 87 verschwenkt werden kann. Bei Verschwenken um die Achse 87 spannt der Strahl des Richtlasers 88 eine zur Symmetrieebene 24 - Figur 1 - parallele Ebene auf, wobei der Abstand der aufgespannten Ebene von der Symmetrieebene 24 über eine Meßeinteilung 90 bestimmt werden kann. Auf diese Weise wird es möglich, zusätzliche Punkte des Rahmens zu vermessen.

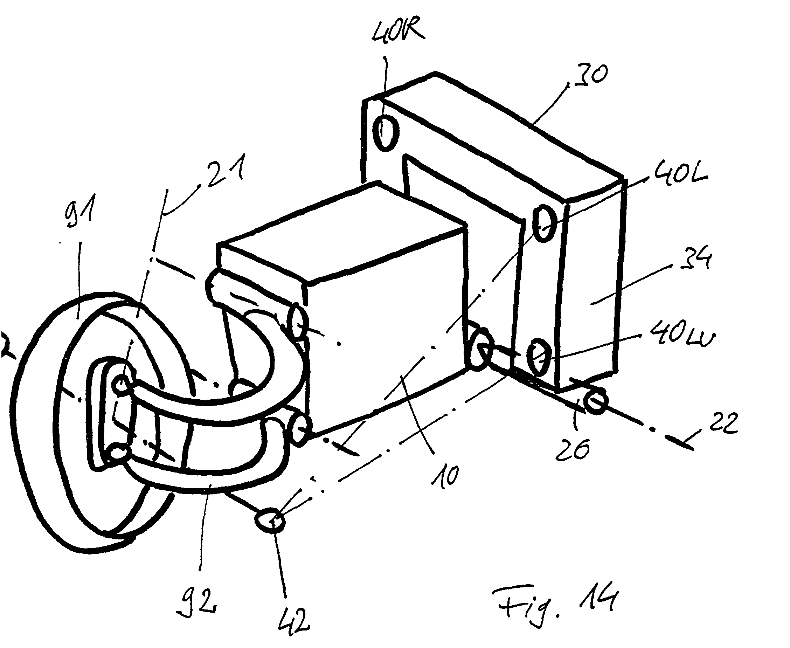

Figur 14 zeigt einen schematisch dargestellten Motorradrahmen 10, der eine Vorderradaufhängung für ein Vorderrad 91 in Form einer Achsschenkellenkung aufweist, die an Schwingen 92 aufgehängt ist. Ein erfingungsgemäßer Meßbügel 30 mit zwei Bildaufnehmern 40R und 40L ist, wie bereits vorstehend erläutert, an der Schwingenachse 22 mittels Zentrierstiften 26 befestigt. Bei einer Konstruktion, wie sie in Figur 14 dargestellt ist, ist es nur sehr umständlich möglich, Meßkörper 42, die auf Kreisbögen verschwenken, wenn das Vorderrad 91 verschwenkt wird, so anzubringen, daß sie im Bildbereich der beiden Bildaufnehmer 40R und 40L liegen. Erfindungsgemäß ist daher vorgesehen, auch in den Schenkeln 34 des Meßbügels 30 Bildaufnehmer 40LU, und - nicht sichtbar - 40RU anzubringen, so daß rechts und links der Lenkachse 21 angeordnete Meßkörper 42 jeweils im Bildbereich eines senkrechten Bildaufnehmerpaares zu liegen kommen.

Durch weitere analoge Anwendung des erfindungsgemäßen Verfahrens werden die Meßkörper 42 in verschiedenen Stellungen jeweils von einem Bildaufnehmerpaar vermessen, so daß sich zumindest ein berechenbarer Kreis ergibt, in dessen Kreismittelpunkt K die Lenkachse 21 senkrecht steht.

Die erfindungsgemäße Vorrichtung und das erfindungsgemäße Verfahren erlauben eine genauere und komfortablere Vermessung eines Zweiradrahmens, als dies bisher möglich ist. Insbesondere erlaubt eine weitergehende Ausgestaltung des erfindungsgemäßen Verfahrens die Vermessung von lenkerkopflosen Rahmenkonstruktionen und eine dynamische Vermessung im Fahrbetrieb.

### Bezugszeichenliste

- 10: Rahmen
- 12L, 12R: Unterzüge
- 14: Lenkkopfrohr
- 16: Hauptrohr
- 20: Schwingenlagerung
- 21: erste Achse, Lenkachse
- 22: zweite Achse, Schwingenachse
- 24: Symmetrieebene (von 10)
- 30: Meßbügel
- 32: Querhaupt (von 30)
- 34: Schenkel (von 30)
- 36: Zentrierspitzen
- 38: Paßhülse
- 40L, 40R: Bildaufnehmer, CCD-Kameras
- 42: Meßkörper (Markierung)
- 44: Differenzvektor
- 46: Zentrierrohr
- 48: Meßkörperhalter
- 50: Zentrierzapfen
- 52: L-förmiger Halter (von 48)
- 54: Ausleger
- 56: Schnittpunkt zwischen 21 und 60
- 58: Meßkörperhalter
- 60: untere Lenkkopfebene
- 61: Teleskopgabel
- 62: Schwinge
- 64: Dämpfer/Feder-Element
- 66: Lager
- 67: Lenker
- 68: Meßkörperhalter
- 70: Kreisbogen
- 72L, 72R: (zweite) Bildaufnehmer (CCD-Kameras)
- 74: Meßkörper (auf 22)
- 80L, 80R: Drehtische
- 82: Schwenkachse
- 84: Hinterradachse
- 86: Schwinge
- 87: Gewindestange
- 88: Richtlaser
- 90: Meßeinteilung
- 91: Vorderrad
- 92: Schwingen
- s: lichte Bügelweite (von 30)
- c: Symmetrieebenenversatz
- p: Breite (von 38)
- bₛ: Schwingenbreite
- α: Lenkkopfwinkel
- β: Sturz
- z: Längsachsenversatz
- K: Kreismittelpunkt
- a: Aufbauhöhe (von 58)
- x: Meßkörperabstand (zwischen Meßkörper 74 auf Achse 22)

## Patentansprüche

1. Vorrichtung zum Vermessen der Lage einer ersten Achse (21) eines zu vermessendes Objekt relativ zu einer zweiten Achse (22) des Objekts, **wobei die Vorrichtung aufweist**:
- zumindest zwei mit festem räumlichen Bezug zur ersten Achse an dem zu vermessenden Objekt anbringbare Markierungen (42);
- mindestens zwei voneinander beabstandete Bildaufnehmer (40L, 40R), die jeweils ein Bildsignal generieren;
- Positionierungsmittel (30), um die Bildaufnehmer in festem räumlichen Zusammenhang zueinander und zu der zweiten Achse so zu positionieren, daß die mit festem räumlichen Bezug zu der ersten Achse angeordneten Markierungen jeweils im Bildbereich von mindestens zwei Bildaufnehmern liegen;
- Datenverarbeitungsmittel, um aus den Bildsignalen die Lage der ersten Achse zu bestimmen,
- wobei die Positionierungsmittel (30) eine mechanische Verbindung (32) aufweisen, die den Basisabstand zwischen den beiden Bildaufnehmern (40L, 40R) festlegt,
**dadurch gekennzeichnet, daß**
- durch die Datenverarbeitungsmittel aus den Bildsignalen die räumlichen Koordinaten der Meßkörper unter Verwendung photogrammetrischer Berechnungsmethoden bestimmbar sind und aus diesen die Lage der ersten Achse bestimmbar ist,
- die beiden Bildaufnehmer (40L, 40R) in fester Winkellage mit der den Basisabstand zwischen ihnen festlegenden mechanischen Verbindung (32) verbunden sind und
- die mindestens zwei Markierungen Meßkörper (42) sind, deren Mittelpunkte auf der ersten Achse (21) liegen.

2. Vorrichtung zum Vermessen der Lage einer ersten Achse (21) eines zu vermessendes Objekt relativ zu einer zweiten Achse (22) des Objekts, **wobei die Vorrichtung aufweist**:
- zumindest zwei mit festem räumlichen Bezug zur ersten Achse an dem zu vermessenden Objekt anbringbare Markierungen (42);
- mindestens zwei voneinander beabstandete Bildaufnehmer (40L, 40R), die jeweils ein Bildsignal generieren;
- Positionierungsmittel (30), um die Bildaufnehmer in festem räumlichen Zusammenhang zueinander und zu der zweiten Achse so zu positionieren, daß die mit festem räumlichen Bezug zu der ersten Achse angeordneten Markierungen jeweils im Bildbereich von mindestens zwei Bildaufnehmern liegen;
- Datenverarbeitungsmittel, um aus den Bildsignalen die Lage der ersten Achse zu bestimmen,
- wobei die Positionierungsmittel (30) eine mechanische Verbindung (32) aufweisen, die den Basisabstand zwischen den beiden Bildaufnehmern (40L, 40R) festlegt,
**dadurch gekennzeichnet, daß**
- durch die Datenverarbeitungsmittel aus den Bildsignalen die räumlichen Koordinaten der Meßkörper unter Verwendung photogrammetrischer Berechnungsmethoden bestimmbar sind und aus diesen die Lage der ersten Achse bestimmbar ist,
- die beiden Bildaufnehmer (40L, 40R) in fester Winkellage mit der den Basisabstand zwischen ihnen festlegenden mechanischen Verbindung (32) verbunden sind und
- die Markierungen als Meßkörper (42) ausgebildet sind und ein die Meßkörper tragender Meßkörperhalter (68) vorgesehen ist, der um die erste Achse (21) schwenkbar ist, wobei die Meßkörper (42) an dem Meßkörperhalter (68) derartig angeordnet sind, daß sie bei Drehen des Meßkörperhalters (68) um die erste Achse auf Kreisbögen (70) mit verschiedenen Kreismittelpunkten (K) bewegbar sind, die auf der zu ermittelnden ersten Achse liegen.

3. Vorrichtung nach Anspruch 1 oder 2, **dadurch gekennzeichnet, daß** die Positionierungsmittel im wesentlichen aus einem U-förmigen Bügel (30) bestehen, dessen Querhaupt (32) die mechanische Verbindung zwischen den beiden Bildaufnehmern (40L, 40R) bildet, dessen beide Schenkel (34) jeweils ein mit der zweiten Achse (22) fluchtend ausrichtbares Ansatzteil (36) aufweisen.

4. Vorrichtung nach einem der Ansprüche 1 bis 3, **dadurch gekennzeichnet daß**, die Markierungen als Meßkörper ausgebildet sind und ein Meßkörperhalter (48, 58, 68) vorgesehen ist, der zumindest zwei Meßkörper (42) in der ersten Achse (21) positioniert.

5. Vorrichtung nach Anspruch 3, **gekennzeichnet durch** ein Stützelement, mit dem der um die zweite Achse (22) schwenkbare Bügel (30) abstützbar ist.

6. Vorrichtung nach Anspruch 3, **dadurch gekennzeichnet, daß** sie eine auf das Ansatzteil (36) aufsetzbare Paßhülse (38) aufweist.

7. Vorrichtung nach Anspruch 3, **gekennzeichnet durch** einen an dem Querhaupt (32) des Bügels (30) gelagerten, um eine zur zweiten Achse (22) parallele Achse (87) schwenkbaren Richtlaser (88) zum Aufspannen einer Bezugsebene.

8. Vorrichtung nach Anspruch 3, **dadurch gekennzeichnet, daß** die Ansatzteile an den Schenkeln (34) des Bügels in Form von Zentrierspitzen (36) ausgebildet sind.

9. Vorrichtung nach einem der Ansprüche 1 bis 8, **dadurch gekennzeichnet, daß** die Positionierungsmittel (30) optische Leitmittel umfassen zur Ausrichtung der beiden Bildaufnehmer mit festem räumlichen Bezug zu der zweiten Achse (22).

10. Vorrichtung nach Anspruch 1 oder 2, **dadurch gekennzeichnet, daß** die Positionierungsmittel zwei zusätzliche Bildaufnehmer (72L, 72R) umfassen, die in festem räumlichen Bezug zu den ersten beiden Bildaufnehmern (40L, 40R) angeordnet und auf die zweite Achse (22) ausgerichtet sind, um die Lage derselben in bezug auf die ersten beiden Bildaufnehmer zu erfassen.

11. Vorrichtung nach einem der Ansprüche 1 bis 10, **dadurch gekennzeichnet, daß** die Bildaufnehmer Kameras, vorzugsweise CCD-Kameras (40L, 40R) sind.

12. Vorrichtung nach einem der Ansprüche 1 bis 11, **dadurch gekennzeichnet, daß** die Markierungen (42) in Verlängerung der ersten Achse (21) angeordnet sind.

13. Vorrichtung nach einem der Ansprüche 1 bis 12, **dadurch gekennzeichnet, daß** die Markierungen mit der ersten Achse direkt oder indirekt verbunden sind.

14. Verfahren zum Vermessen der Lage einer ersten Achse (21) eines zu vermessenden Objekts relativ zu einer zweiten Achse (22) des Objekts, **mit folgenden Schritten**:
- Anbringen von zumindest zwei Markierungen (42) in Verlängerung der ersten Achse (21),
- Herstellen eines festen räumlichen Bezugs zwischen mindestens zwei Bildaufnehmern (40L, 40R), der zweiten Achse (22) und einem feststehendem Koordinatensystem mittels optischer oder mechanischer Positionierungsmittel,
- Berechnen der Ortsvektoren beider auf der ersten Achse gelegener Markierungen (42) aus den Bilddaten von jeweils zwei Bildaufnehmern (40L, 40R) mittels photogrammetrischer Berechnungsmethoden,
- Berechnung eines auf der ersten Achse (21) liegenden Differenzvektors aus den besagten Ortsvektoren,
- wobei die beiden Bildaufnehmer in fester Winkellage mit einer den Basisabstand zwischen ihnen festliegenden mechanischen Verbindung verbunden sind.

15. Verfahren nach Anspruch 14, **dadurch gekennzeichnet, daß** als auf der ersten Achse (21) liegender Vektor ein Differenzvektor (44) der beiden Ortsvektoren berechnet wird.

16. Verfahren nach Anspruch 14, **dadurch gekennzeichnet, daß** als auf der ersten Achse (21) liegender Vektor ein Richtungsvektor mittels einer Fehlerausgleichsrechnung berechnet wird.

17. Verfahren zum Vermessen der Lage einer ersten Achse (21) relativ zu einer zweiten Achse (22), mit folgenden Schritten:
- Anbringen von zumindest zwei Markierungen (42) mit radialem Abstand von der ersten Achse an einem um die erste Achse schwenkbaren Bauteil (67) mittels eines Meßkörperhalters (68) so daß sie bei Ausschlag des schwenkbaren Bauteils (67) Kreisbögen (70) mit verschiedenen Kreismittelpunkten (K) beschreiben, die auf der zu ermittelnden ersten Achse liegen,
- Herstellen eines festen räumlichen Bezugs zwischen mindestens zwei Bildaufnehmern (40L, 40R), der zweiten Achse (22) und einem feststehendem Koordinatensystem mittels optischer oder mechanischer Positionierungsmittel,
- Berechnen der Ortsvektoren beider Markierungen in einer ersten Stellung aus den Bilddaten von mindestens zwei Bildaufnehmern mittels photogrammetrischer Berechnungsmethoden,
- Verschwenken des schwenkbaren Bauteil (67) in eine andere Stellung, so daß die Markierungen (42) auf einem Kreisbogen (70) in eine andere Stellung (42L, 42R) verfahren werden,
- wiederholte Berechnung der Ortsvektoren und erneute Verschwenkung, bis die Ortsvektoren und damit Markierungspositionen in mindestens drei Stellungen bekannt sind,
- Berechnen der beiden von den Markierungen (42) beschriebenen Kreise aus jeweils drei bekannten Ortsvektoren mit den Mitteln der analytischen Geometrie,
- Berechnen der Kreismittelpunkte (K) der Kreise,
- Berechnen des auf der ersten Achse liegenden Differenzvektors (44) der Ortsvektoren der Kreismittelpunkte,
- wobei die beiden Bildaufnehmer in fester Winkellage mit einer den Basisabstand zwischen ihnen festliegenden mechanischen Verbindung verbunden sind.

18. Verfahren nach einem der Ansprüche 14 bis 17, **dadurch gekennzeichnet, daß** in einem weiteren Schritt die errechnete Darstellung der ersten Achse in dem ortsfesten Koordinatensystem auf ein zweites, die zweite Achse als Koordinatenachse enthaltendes Koordinatensystem transformiert wird.

## Claims

1. Apparatus for measuring the position of a first axis (21) of an article to be measured relative to a second axis (22) of the article, **wherein the apparatus comprises**:
- at least two markings (42), which may be provided in a fixed spatial relationship to the first axis on the article to be measured;
- at least two image pick-ups (40L, 40R), which are disposed at a distance from one another and each generate an image signal;
- positioning means (30) for positioning the image pick-ups in a fixed spatial relationship to one another and to the second axis such that the markings disposed in a fixed spatial relationship to the first axis lie in each case in the image range of at least two image pick-ups;
- data processing means for determining the position of the first axis from the image signals,
- wherein the positioning means (30) comprise a mechanical connection (32) defining the basic distance between the two image pick-ups (40L, 40R),
**characterized in that**
- from the image signals the three-dimensional coordinates of the measurement bodies are determinable by the data processing means using photogrammetrical calculating methods and from said three-dimensional coordinates the position of the first axis is determinable,
- the two image pick-ups (40L, 40R) are connected in a fixed angular position to the mechanical connection (32) defining the basic distance between them and
- the at least two markings are measurement bodies (42), the centres of which lie on the first axis (21).

2. Apparatus for measuring the position of a first axis (21) of an article to be measured relative to a second axis (22) of the article, **wherein the apparatus comprises**:
- at least two markings (42), which may be provided in a fixed spatial relationship to the first axis on the article to be measured;
- at least two image pick-ups (40L, 40R), which are disposed at a distance from one another and each generate an image signal;
- positioning means (30) for positioning the image pick-ups in a fixed spatial relationship to one another and to the second axis such that the markings disposed in a fixed spatial relationship to the first axis lie in each case in the image range of at least two image pick-ups;
- data processing means for determining the position of the first axis from the image signals,
- wherein the positioning means (30) comprise a mechanical connection (32) defining the basic distance between the two image pick-ups (40L, 40R),
**characterized in that**
- from the image signals the three-dimensional coordinates of the measurement bodies are determinable by the data processing means using photogrammetrical calculating methods and from said three-dimensional coordinates the position of the first axis is determinable,
- the two image pick-ups (40L, 40R) are connected in a fixed angular position to the mechanical connection (32) defining the basic distance between them and
- the markings take the form of measurement bodies (42) and a measurement body holder (68) carrying the measurement bodies is provided, which is capable of swivelling about the first axis (21), wherein the measurement bodies (42) are disposed in such a way on the measurement body holder (68) as to be movable, as the measurement body holder (68) rotates about the first axis, along arcs (70) having various circle centres (K), which lie on the first axis which is to be determined.

3. Apparatus according to claim 1 or 2, **characterized in that** the positioning means substantially comprise a U-shaped bracket (30), of which the crosshead (32) forms the mechanical connection between the two image pick-ups (40L, 40R) and of which the two limbs (34) comprise in each case an add-on part (36), which is alignable flush with the second axis (22).

4. Apparatus according to one of claims 1 to 3,
**characterized in that** the markings take the form of measurement bodies and a measurement body holder (48, 58, 68) is provided, which positions at least two measurement bodies (42) in the first axis (21).

5. Apparatus according to claim 3, **characterized by** a supporting element, by means of which the bracket (30) capable of swivelling about the second axis (22) is supportable.

6. Apparatus according to claim 3, **characterized in that** it comprises a fitting sleeve (38) mountable onto the add-on part (36).

7. Apparatus according to claim 3, **characterized by** a directional laser (88), which is supported against the crosshead (32) of the bracket (30) and capable of swivelling about an axle (87) parallel to the second axis (22), for defining a reference plane.

8. Apparatus according to claim 3, **characterized in that** the add-on parts on the.limbs (34) of the bracket are constructed in the form of centring tips (36).

9. Apparatus according to one of claims 1 to 8,
**characterized in that** the positioning means (30) comprise optical guide means for aligning the two image pick-ups in a fixed spatial relationship to the second axis (22).

10. Apparatus according to claim 1 or 2, **characterized in that** the positioning means comprise two additional image pick-ups (72L, 72R), which are disposed in a fixed spatial relationship to the first two image pick-ups (40L, 40R) and aligned with the second axis (22), for determining the position of the latter in relation to the first two image pick-ups.

11. Apparatus according to one of claims 1 to 10,
**characterized in that** the image pick-ups are cameras, preferably CCD cameras (40L, 40R).

12. Apparatus according to one of claims 1 to 11,
**characterized in that** the markings (42) are disposed in an extension of the first axis (21).

13. Apparatus according to one of claims 1 to 12,
**characterized in that** the markings are connected directly or indirectly to the first axis.

14. Method of measuring the position of a first axis (21) of an article to be measured relative to a second axis (22) of the article, **comprising the following steps**:
- providing at least two markings (42) in an extension of the first axis (21),
- establishing a fixed spatial relationship between at least two image pick-ups (40L, 40R), the second axis (22) and a fixed coordinate system by means of optical or mechanical positioning means,
- calculating the radius vectors of both markings (42) situated on the first axis from the image data of in each case two image pick-ups (40L, 40R) by means of photogrammetrical calculating methods,
- calculating from the said radius vectors an incremental vector lying on the first axis (21),
- wherein the two image pick-ups are connected in a fixed angular position to a mechanical connection defining the basic distance between them.

15. Method according to claim 14, **characterized in that** as a vector lying on the first axis (21) an incremental vector (44) of the two radius vectors is calculated.

16. Method according to claim 14, **characterized in that** as a vector lying on the first axis (21) a directional vector is calculated by means of an error compensating computation.

17. Method of measuring the position of a first axis (21) relative to a second axis (22), **comprising the following steps**:
- providing at least two markings (42) at a radial distance from the first axis on a component (67), which is capable of swivelling about the first axis, by means of a measurement body carrier (68) so that, upon excursion of the swivelling component (67), they describe arcs (70) having various circle centres (K), which lie on the - first axis to be determined,
- establishing a fixed spatial relationship between at least two image pick-ups (40L, 40R), the second axis (22) and a fixed coordinate system by means of optical or mechanical positioning means,
- calculating the radius vectors of both markings in a first position from the image data of at least two image pick-ups by means of photogrammetrical calculating methods,
- swivelling the swivelling component (67) into another position so that the markings (42) are moved along an arc (70) into another position (42L, 42R),
- repeat calculation of the radius vectors and renewed swivelling until the radius vectors and hence marking positions in at least three positions are known,
- calculating the two circles described by the markings (42) from, in each case, three known radius vectors by means of analytical geometry,
- calculating the circle centres (K) of the circles,
- calculating the incremental vector (44), lying on the first axis, of the radius vectors of the circle centres,
- wherein the two image pick-ups are connected in a fixed angular position to a mechanical connection defining the basic distance between them.

18. Method according to one of claims 14 to 17,
**characterized in that** in a further step the calculated representation of the first axis in the fixed coordinate system is transformed to a second coordinate system containing the second axis as an axis of coordinate.

## Revendications

1. Dispositif pour mesurer la position d'un premier axe (21) d'un objet à mesurer par rapport à un deuxième axe (22) de l'objet, ce dispositif comprenant:
- au moins deux repères (42) pouvant être rapportés sur l'objet à mesurer, en relation spatiale fixe avec le premier axe;
- au moins deux capteurs d'image espacés l'un de l'autre (40L, 40R), qui génèrent chacun un signal d'image;
- des moyens de positionnement (30) pour positionner les capteurs d'image en relation spatiale fixe l'un par rapport à l'autre et par rapport au deuxième axe, de façon que les repères disposés en relation spatiale fixe par rapport au premier axe se trouvent chacun dans le champ d'image d'au moins deux capteurs d'image;
- des moyens de traitement de données pour déterminer la position du premier axe d'après les signaux d'image,
- les moyens de positionnement (30) présentant une liaison mécanique (32) qui détermine la distance de base entre les deux capteurs d'image (40L, 40R),
**caractérisé en ce que** :
- avec les moyens de traitement de données, les coordonnées spatiales des corps de mesure peuvent être déterminées en utilisant des méthodes de calcul photogrammétriques à partir des signaux d'image, et la position du premier axe peut être déterminée à partir de celles-ci;
- les deux capteurs d'image (40L, 40R) sont reliés en position angulaire fixe avec la liaison mécanique (32) déterminant la distance de base entre eux; et
- les au moins deux repères sont des corps de mesure (42), dont les milieux se trouvent sur le premier axe (21).

2. Dispositif pour mesurer la position d'un premier axe (21) d'un objet à mesurer par rapport à un deuxième axe (22) de l'objet, ce dispositif comprenant:
- au moins deux repères (42) pouvant être rapportés sur l'objet à mesurer en relation spatiale fixe avec le premier axe;
- au moins deux capteurs d'image espacés l'un de l'autre (40L, 40R), qui génèrent chacun un signal d'image;
- des moyens de positionnement (30) pour positionner les capteurs d'image en relation spatiale fixe l'un par rapport à l'autre et par rapport au deuxième axe de façon que les repères disposés en relation spatiale fixe par rapport au premier axe se trouvent chacun dans le champ d'image d'au moins deux capteurs d'image;
- des moyens de traitement de données pour déterminer la position du premier axe d'après les signaux d'image,
- les moyens de positionnement (30) présentant une liaison mécanique (32) qui détermine la distance de base entre les deux capteurs d'image (40L, 40R),
**caractérisé en ce que** :
- avec les moyens de traitement de données, les coordonnées spatiales des corps de mesure peuvent être déterminées en utilisant des méthodes de calcul photogrammétriques à partir des signaux d'image, et la position du premier axe peut être déterminée à partir de celles-ci;
- les deux capteurs d'image (40L, 40R) sont reliés en position angulaire fixe avec la liaison mécanique (32) déterminant la distance de base entre eux; et
- les repères sont réalisés sous la forme de corps de mesure (42) et il est prévu un support de corps de mesure (68) qui porte les corps de mesure et peut pivoter autour du premier axe (21), les corps de mesure (42) étant agencés sur le support de corps de mesure (68) de manière telle que lors de la rotation du support de corps de mesure (68) autour du premier axe, ils sont mobiles sur des arcs de cercle (70) ayant des centres différents (K) situés sur le premier axe à déterminer.

3. Dispositif selon la revendication 1 ou 2,
**caractérisé en ce que** les moyens de positionnement consistent essentiellement en un arceau (30) en U, dont la traverse (32) constitue la liaison mécanique entre les deux capteurs d'image (40L, 40R), et dont les deux jambes (34) présentent chacune un embout (36) pouvant être aligné avec le second axe (22).

4. Dispositif selon l'une des revendications 1 à 3,
**caractérisé en ce que** les repères sont réalisés sous la forme de corps de mesure et il est prévu un support de corps de mesure (48, 58, 68) qui positionne au moins deux corps de mesure (42) sur le premier axe (21).

5. Dispositif selon la revendication 3, **caractérisé par** un élément d'appui, permettant de donner appui à l'arceau (30) pivotant autour du second axe (22).

6. Dispositif selon la revendication 3, **caractérisé en ce qu'**il présente un manchon adaptateur (38) pouvant être monté sur l'embout (36).

7. Dispositif selon la revendication 3, **caractérisé par** un laser directionnel (88) supporté sur la traverse (32) de l'arceau (30), et pivotant autour d'un axe (87) parallèle au second axe (22) pour établir un plan de référence.

8. Dispositif selon la revendication 3, **caractérisé en ce que** les embouts sur les jambes (34) de l'arceau sont réalisés sous la forme de pointes de centrage (36).

9. Dispositif selon l'une des revendications 1 à 8,
**caractérisé en ce que** les moyens de positionnement (30) comprennent des moyens de guidage optique pour orienter les deux capteurs d'image en relation spatiale fixe avec le second axe (22).

10. Dispositif selon la revendication 1 ou 2,
**caractérisé en ce que** les moyens de positionnement comprennent deux capteurs d'image (72L, 72R) supplémentaires, qui sont disposés en relation spatiale fixe avec les deux premiers capteurs d'image (40L, 40R) et sont orientés vers le second axe (22), pour capter la position de ce dernier par rapport aux deux premiers capteurs d'image.

11. Dispositif selon l'une des revendications 1 à 10,
**caractérisé en ce que** les capteurs d'image sont des caméras, de préférence des caméras CCD (40L, 40R).

12. Dispositif selon l'une des revendications 1 à 11,
**caractérisé en ce que** les repères (42) sont disposés dans le prolongement du premier axe (21).

13. Dispositif selon l'une des revendications 1 à 12,
**caractérisé en ce que** les repères sont reliés directement ou indirectement avec le premier axe.

14. Procédé pour mesurer la position d'un premier axe (21) d'un objet à mesurer par rapport à un deuxième axe (22) de l'objet, comprenant les étapes suivantes :
- monter au moins deux repères (42) dans le prolongement du premier axe (21),
- établir une relation spatiale fixe entre i) au moins deux capteurs d'images (40L, 40R), ii) le second axe (22) et iii) un système de coordonnées fixe, à l'aide de moyens de positionnement mécaniques ou optiques,
- calculer par des méthodes de calcul photogrammétriques les vecteurs espace des deux repères (42) placés sur le premier axe, à partir des données d'image respectives issues de deux capteurs d'image respectifs (40L, 40R) ;
- calculer à partir des vecteurs espace précités un vecteur différence s'étendant sur le premier axe (21),
- les deux capteurs d'image étant reliés en position angulaire fixe avec une liaison mécanique déterminant la distance de base entre eux.

15. Procédé selon la revendication 14, **caractérisé en ce que** comme vecteur s'étendant sur le premier axe (21) on calcule un vecteur différence (44) des deux vecteurs espace.

16. Procédé selon la revendication 14, **caractérisé en ce que** comme vecteur s'étendant sur le premier axe (21) on calcule un vecteur de direction au moyen d'un calcul de compensation d'erreur.

17. Procédé pour mesurer la position d'un premier axe (21) par rapport à un deuxième axe (22), comprenant les étapes suivantes :
- au moyen d'un support de corps de mesure (68), monter au moins deux repères (42) à distance radiale du premier axe sur un composant (67) pivotant autour du premier axe, de façon qu'en cas de déviation du composant pivotant (67) ils décrivent des arcs de cercle (70) avec des centres (K) différents situés sur le premier axe à déterminer,
- établir une relation spatiale fixe entre i) au moins deux capteurs d'image (40L, 40R), ii) le second axe (22), et iii) un système de coordonnées fixe, à l'aide de moyens de positionnement mécaniques ou optiques,
- calculer le vecteur espace des deux repères dans une première position à partir des données d'image d'au moins deux capteurs d'image, par des méthodes de calcul photogrammétriques,
- faire pivoter le composant pivotant (67) dans une autre position, de façon que les repères (42) soient déplacés suivant un arc de cercle (70) jusqu'à une autre position (42L, 42R),
- calculer à nouveau les vecteurs espace et effectuer un nouveau pivotement jusqu'à ce que les vecteurs espace et ainsi les positionnements des repères soient connus dans au moins trois positions,
- calculer les deux cercles décrits par les repères (42), chacun à partir de trois vecteurs espace connus, par les moyens de la géométrie analytique,
- calculer les centres (K) des cercles,
- calculer le vecteur différence (44) des vecteurs espace des centres, qui s'étend sur le premier axe,
- les deux capteurs d'image étant reliés en position angulaire fixe avec une liaison mécanique déterminant la distance de base entre eux.

18. Procédé selon l'une des revendications 14 à 17,
**caractérisé en ce que** dans une étape supplémentaire la représentation calculée du premier axe dans le système de coordonnées fixe est transformée dans un second système de coordonnées utilisant le second axe comme axe de coordonnées.
